# EUROPÄISCHE PATENTSCHRIFT

(11) **EP 4 279 852 B1**
(45) Veröffentlichungstag und Bekanntmachung des Hinweises auf die Patenterteilung: **05.06.2024**
(21) Anmeldenummer: 23172880.9
(22) Anmeldetag: 11.05.2023
(51) Int. Cl.: F28D 1/053

(54) **GEWINDEKÖRPER**
THREADED BODY
CORPS FILETÉ

(30) Priorität: 19.05.2022 CH 6122022
(43) Veröffentlichungstag der Anmeldung: 22.11.2023
(73) Patentinhaber: Zehnder Group International AG, 5722 Gränichen (CH)
(72) Erfinder: Dipietromaria, Andrea, 28896 Quarna Sotto VB (IT)
(74) Vertreter: Rentsch Partner AG

(56) Entgegenhaltungen:
- DE-B1- 1 675 689
- DE-C2- 3 041 215
- DE-U1- 20 116 671
- US-A1- 2019 101 151
- US-B2- 7 217 195

## Beschreibung

### Technisches Gebiet

Die vorliegende Erfindung liegt auf dem technischen Gebiet der Gewindeverbindungen und betrifft einen Gewindekörper, sowie einen Gewindering und einen Gewindenippel umfassend einen solchen Gewindekörper, einen Heizkörper mit einem solchen Gewindekörper, Gewindering oder Gewindenippel, sowie die Verwendung eines derartigen Gewindekörpers, Gewinderings oder Gewindenippels.

### Stand der Technik

Im Stand der Technik ist eine Vielzahl von Gewindekörpern mit verschiedenen Gewindearten bekannt. Diese können in Gewindekörper mit rechtsgängigen Gewindegängen und Gewindekörper mit linksgängigen Gewindegängen eingeteilt werden. Derartige Gewindegänge werden von einer um einen zylindrischen Grundkörper in Axialrichtung wendelförmig herum verlaufenden Gewinderippe ausgebildet. Ein rechtsgängiger Gewindegang bildet dabei ein Gewinde aus, welches mit einem entsprechenden Gegengewinde durch Drehung im Uhrzeigersinn ineinander läuft. Entsprechend bildet ein linksgängiger Gewindegang ein Gewinde aus, welches mit einem entsprechenden Gegengewinde durch Drehung entgegen dem Uhrzeigersinn ineinander läuft.

Bei der Montage von Heizkörpern, insbesondere von Radiatoren wie z.B. Rippenradiatoren, kann es ja nach Raumgrösse erforderlich sein, dass mehrere Heizkörper zu einer Heizkörpereinheit in Serie hintereinander geschaltet werden. Dabei werden die Fluidleitungen von benachbarten Heizkörpern mittels einem Verbindungsnippel mit Doppelgewinde, d.h. auf der einen Seite ein Rechtsgewinde und auf der anderen Seite ein räumlich davon getrenntes und dieses nicht überlagerndes, Linksgewinde, miteinander verbunden. Die Heizkörper, bzw. deren Fluidleitungen, können dabei bereits ein entsprechendes Rechts- oder Linksgewinde aufweisen, oder es werden entsprechende Gewinderinge mit einen Innengewinde an die Fluidleitung angebracht, insbesondere durch Schweissen. Aufgrund der benötigten Rechts- und Linksgewinde zum Verbinden der Heizkörper miteinander mittels einem Verbindungsnippel, müssen die Fluidleitungen der beiden endständigen Heizkörper mittels einem Gewindenippel verschlossen werden. Je nach Art der Montage weist dann der entsprechende endständige Heizkörper ein Rechtsgewinde oder ein Linksgewinde auf, sodass der Monteur jeweils einen Gewindenippel mit Rechtsgewinde und einen Gewindenippel mit Linksgewinde mitführen muss. Falls entsprechend lediglich ein nicht passender Gewindenippel mitgeführt wurde, muss erst ein entsprechender Gewindenippel mit passendem Gewinde besorgt werden, was zeitaufwändig ist. Zudem müssen die Gewindenippel entweder markiert werden, was es nötig macht, die Markierung entsprechend zu identifizieren oder der passende Gewindenippel muss durch Ausprobieren ermittelt werden. Die DE20116671 U1 offenbart einen im Stand der Technik bekannten Heizkörper. Dieser Heizkörper weist ein oder mehrere Zwischenelemente auf. Ein solches Zwischenelement weist eine Durchlassöffnung für Heizungswasser und an einer Seite der Öffnung ein Links- und an der anderen Seite ein Rechtsgewinde auf.

### Darstellung der Erfindung

Es ist daher die allgemeine Aufgabe der Erfindung den Stand der Technik im Bereich der Gewindekörper für Heizkörper weiterzuentwickeln und vorzugsweise die Nachteile des Stands der Technik ganz oder teilweise zu überwinden. In vorteilhaften Ausführungsformen wird ein Gewindekörper und ein Heizkörper mit einem solchen Gewindekörper bereitgestellt, welcher es ermöglicht mit einem entsprechenden Gegengewinde verbunden zu werden, unabhängig davon ob es sich mit dem Gegengewinde um ein rechtsgängiges Gewinde oder ein linksgängiges handelt. In weiteren vorteilhaften Ausführungsformen wird ein Gewindekörper und ein Heizkörper mit einem solchen Gewindekörper bereitgestellt, welcher die Montage von mehreren in Serie geschalteten Heizkörpern zu einer Heizkörpereinheit vereinfacht.

Die allgemeine Aufgabe wird erfindungsgemäss durch den Gegenstand der unabhängigen Ansprüche gelöst. Weitere vorteilhafte Ausführungsformen ergeben sich aus den abhängigen Ansprüchen, sowie der gesamten Offenbarung.

Ein erster Aspekt der Erfindung betrifft einen Gewindekörper für einen Heizkörper. Der Gewindekörper umfasst dabei einen zylindrischen Grundkörper, insbesondere einen kreiszylindrischen Grundkörper, mit einer in Axialrichtung verlaufenden Zylinderlängsachse, sowie einer entlang dem zylindrischen Grundkörper verlaufende, bzw. auf dem zylindrischen Grundkörper verlaufende, Gewindeeinheit. Die Gewindeeinheit definiert, bzw. umfasst, dabei einen rechtsgängigen Gewindegang und einen den rechtsgängigen Gewindegang überlagernden linksgängigen Gewindegang. Die Gewindeeinheit, bzw. der Gewindekörper ist daher derart ausgelegt, dass in dieselbe Gewindeeinheit und typischerweise daher auch an derselben Position, d.h. an derselben Gewindeöffnung oder am selben Gewindevorsprung sowohl ein korrespondierendes Rechtsgewinde und als auch ein korrespondierendes Linksgewinde eingreifen kann. Somit wird die Montage deutlich erleichtert, da es für den Monteur irrelevant ist, ob ein Verbindungselement mit entsprechendem korrespondierendem Rechtsgewinde oder Linksgewinde zur Verfügung steht, da beide Verbindungselemente mit dem erfindungsgemässen Gewindekörper verbunden werden können.

Ein zweiter Aspekt der Erfindung betrifft einen Gewindering umfassend einen Gewindekörper nach einer der hier beschriebenen Ausführungsformen, insbesondere der bezüglich dem ersten Aspekt beschriebenen Ausführungsformen. Bei einem derartigen Gewindering ist der Gewindekörper vorzugsweise ein weiblicher Gewindekörper. In einigen Ausführungsformen weist der Gewindering zusätzlich einen an den Gewindekörper angeordneten Flansch auf. Ein Gewindering ist typischerweise tubulär ausgebildet und kann insbesondere eine durchgängige Öffnung ausbilden oder als Sackloch ausgebildet sein. Ausführungsformen in denen der Gewindering als Sackloch ausgebildet ist, sind typischerweise als Stopfen ausgebildete Gewinderinge.

Ein dritter Aspekt der Erfindung betrifft einen Gewindenippel umfassend einen Gewindekörper nach einer der hier beschriebenen Ausführungsformen, insbesondere der bezüglich dem ersten Aspekt beschriebenen Ausführungsformen. Bei einem derartigen Gewindenippel ist der Gewindekörper vorzugsweise ein männlicher Gewindekörper. Ein Gewindenippel kann tubulär ausgebildet sein und kann insbesondere eine durchgängige Öffnung ausbilden oder als Sackloch ausgebildet sein. Ausführungsformen in denen der Gewindenippel als Sackloch ausgebildet ist, sind typischerweise als Stopfen ausgebildete Gewindenippel. Gewindering und Gewindenippel sind beides Verbindungselemente. Diese beiden Verbindungselemente können miteinander im Allgemeinen eine formschlüssige Gewindeverbindung eingehen.

Ein vierter Aspekt der Erfindung betrifft einen Heizkörper umfassend einen Gewindekörper nach einer der hier beschriebenen Ausführungsformen, insbesondere bezüglich dem ersten Aspekt beschriebenen Ausführungsformen, oder einen Gewindering nach einer der hier beschriebenen Ausführungsformen, insbesondere bezüglich dem zweiten Aspekt beschriebenen Ausführungsformen, oder einen Gewindenippel nach einer der hier beschriebenen Ausführungsformen, insbesondere bezüglich dem dritten Aspekt beschriebenen Ausführungsformen.

Ein fünfter Aspekt der Erfindung betrifft die Verwendung eines Gewindekörpers nach einer der hier beschriebenen Ausführungsformen, insbesondere bezüglich dem ersten Aspekt beschriebenen Ausführungsformen, oder eines Gewinderings nach einer der hier beschriebenen Ausführungsformen, insbesondere bezüglich dem zweiten Aspekt beschriebenen Ausführungsformen, oder eines Gewindenippels nach einer der hier beschriebenen Ausführungsformen, insbesondere bezüglich dem dritten Aspekt beschriebenen Ausführungsformen, zur Montage eines Heizkörpers, insbesondere zum Verschluss oder Verbinden von Fluidleitungen eines Heizkörpers.

Ein sechster Aspekt der Erfindung betrifft eine Heizkörpereinheit umfassend mehrere miteinander verbundene Heizkörper, wobei mindestens einer der miteinander verbundenen Heizkörper ein Heizkörper gemäss einer der hier beschriebenen Ausführungsformen ist.

Ein siebter Aspekt der Erfindung betrifft eine Verwendung eines Gewindenippels, insbesondere eines als Stopfen ausgebildeten Gewindenippels, in einem Heizkörper gemäss einer der hier beschriebenen Ausführungsformen. Ein als Stopfen ausgebildeter Gewindenippel kann dabei insbesondere zum Verschluss einer Fluidleitung eines erfindungsmässen Heizkörpers verwendet werden.

Ein achter Aspekt der Erfindung betrifft ein Verfahren zur Herstellung eines erfindungsgemässen Heizkörpers.

Überlagernde Gewindegänge sind dabei Gewindegänge, welche auf derselben Seite des zylindrischen Grundkörpers verlaufen und es dabei erlauben, dass in die Gewindeeinheit ein korrespondierendes Rechtsgewinde und ebenfalls ein korrespondierendes Linksgewinde in dieselbe Öffnung eingedreht werden kann oder dass die Gewindeeinheit selbst in die Öffnung eines korrespondierenden Rechtsgewindes und ebenfalls in die Öffnung eines korrespondierenden Linksgewindes eingedreht werden kann. Überlagernde Gewindegänge weisen dabei insbesondere dieselbe Ausdehnung und Anordnung entlang der Zylinderlängsachse auf, d.h. die beiden Startpunkte des rechtsgängigen und des linksgängigen Gewindegangs sind bezüglich der Zylinderlängsachse im Wesentlichen auf derselben Höhe und optional sind auch die beiden Endpunkte des rechtsgängigen und des linksgängigen Gewindegangs bezüglich der Zylinderlängsachse im Wesentlichen auf derselben Höhe. Für den Fachmann ist klar, dass die Gewindeeinheit ein Rechtsgewinde und ein dieses überlagerndes Linksgewinde umfasst, oder sogar dass die Gewindeeinheit aus einem Rechtsgewinde und einem dieses überlagerndes Linksgewinde, bestehen kann.

Der Fachmann versteht, dass der Gewindekörper, insbesondere die Gewindeeinheit, dabei als s.g. männlicher Gewindekörper, bzw. Gewindeeinheit oder als s.g. weiblicher Gewindekörper, bzw. Gewindeeinheit ausgebildet sein kann. Ein weiblicher Gewindekörper definiert dabei eine Öffnung und die Gewindeeinheit ist typischerweise eine Innengewindeeinheit. Ein solcher weiblicher Gewindekörper ist daher ein Gewindering. Das entsprechende Gegenstück ist dabei ein männliches Verbindungselement mit einem korrespondierenden Aussengewinde. Ein solcher männlicher Gewindekörper ist daher ein Gewindenippel. Ein männlicher Grundkörper umfasst einen Vorsprung der typischerweise durch einen massiven oder auch tubulären, zylindrischen Grundkörper gebildet wird, entlang welchem dann die Gewindeeinheit als Aussengewindeeinheit verläuft. Das entsprechende Gegenstück ist dabei ein weibliches Verbindungselement mit einer Öffnung und einem korrespondierenden Innengewinde.

Die Gewindeeinheit kann dabei beispielsweise entlang der Zylindermantelfläche verlaufen.

Der zylindrische Grundkörper kann in einigen Ausführungsformen tubulär ausgebildet sein. In bestimmten Ausführungsformen kann dabei die Gewindeeinheit entlang der Innenfläche des tubulären zylindrischen Grundkörpers verlaufen. Ein tubulärer zylindrischer Grundkörper definiert dabei eine Öffnung.

In einigen Ausführungsformen ist die Gewindeeinheit eine Innengewindeeinheit mit einem rechtsgängigen Innengewindegang und einem den rechtsgängigen Innengewindegang überlagernden linksgängigen Innengewindegang. In solchen Ausführungsformen verläuft die Gewindeeinheit daher typischerweise auf einer Innenfläche eines tubulären zylindrischen Grundkörpers und ist der Zylinderlängsachse zugewandt. Ebenfalls sind in diesen Ausführungsformen der rechtsgängige und der linksgängige Gewindegang, also der rechtsgängigen Innengewindegang und der linksgängigen Innengewindegang, der Zylinderlängsachse zugewandt.

In einigen alternativen Ausführungsformen ist die Gewindeeinheit eine Aussengewindeeinheit mit einem rechtsgängigen Aussengewindegang und ein den rechtsgängigen Aussengewindegang überlagernden linksgängigen Aussengewindegang. In solchen Ausführungsformen verläuft die Gewindeeinheit daher typischerweise auf einer Aussenfläche, also der Mantelfläche des zylindrischen Grundkörpers und ist von der Zylinderlängsachse abgewandt. Ebenfalls sind in diesen Ausführungsformen der rechtsgängige und der linksgängige Gewindegang, also der rechtsgängigen Aussengewindegang und der linksgängigen Aussengewindegang, von der Zylinderlängsachse abgewandt.

In einigen Ausführungsformen umfasst die Gewindeeinheit mehrere vom zylindrischen Grundkörper vorstehende Gewinderippen. Dabei weist jede Gewinderippe eine Tiefe auf, welche sich von einem Tiefenmaximum aus in beide, also die positive und negative, sich entgegengesetzten Umfangsrichtungen verringert, insbesondere kontinuierlich verringert. Typischerweise sind die mehreren vom zylindrischen Grundkörper vorstehenden Gewinderippen separate Gewinderippen, d.h. diese sind nicht direkt miteinander verbunden, bzw. gehen nicht direkt ineinander über, sondern sind voneinander getrennt. Die Tiefe definiert dabei die Ausdehnung der entsprechenden Rippe vom zylindrischen Grundkörper aus in Radialrichtung. Die Radialrichtung steht dabei senkrecht zur Axialrichtung, also senkrecht zur Zylinderlängsachse. Die Umfangsrichtung beschreibt dabei die umlaufende Richtung entlang der Aussen- (also Mantel-) oder Innenfläche des zylindrischen Grundkörpers als Drehung um die Zylinderlängsachse auf einer bestimmten Höhe, d.h. einer festen Position bezüglich der Zylinderlängsachse. Die Umfangsrichtung weist dabei eine positive Umfangsrichtung, also eine Drehung im Uhrzeigersinn und eine dieser entgegengesetzte negative Umfangsrichtung, also eine Drehung entgegen dem Uhrzeigersinn, auf. Das Tiefenmaximum einer Gewinderippe ist dabei ein Punkt an welchem die Tiefe der jeweiligen Gewinderippe ihren grössten Wert aufweist und an welchen vorzugsweise die Tiefe der jeweiligen Gewinderippe grösser ist als an jedem anderen Punkt entlang der Umfangsrichtung.

In einigen Ausführungsformen verringert sich die Tiefe jeder Gewinderippe in die beiden sich entgegensetzte Umfangsrichtungen bis auf die Höhe, bzw. das Level, des zylindrischen Grundkörpers. Somit verringert sich die Tiefe jeder Gewinderippe in positiver und negative Umfangsrichtung derart, dass die Gewinderippe ohne Abstufung in den zylindrischen Grundkörper übergeht, bzw. mit diesem fluchtet. In bestimmten Ausführungsformen verringert sich die Tiefe jeder Gewinderippe in die beiden sich entgegensetzte Umfangsrichtungen derart bis auf die Höhe des zylindrischen Grundkörpers, dass jede Gewinderippe in Umfangsrichtung nur teilweise entlang dem zylindrischen Ringkörper verläuft und diesen und insbesondere die Zylinderlängsachse, weniger als 360° umgibt, insbesondere weniger als 270°, insbesondere weniger als 220°.

In einigen Ausführungsformen ist jede Gewinderippe im Querschnitt im Wesentlichen trapezförmig und/oder dreieckig ausgebildet. Der Querschnitt ist dabei ein Querschnitt in einer Ebene die durch die Axialrichtung und die Radialrichtung definiert wird. Entlang beider sich entgegengesetzter Umfangsrichtungen kann sich vorzugsweise bei jeder Gewinderippe der Innenwinkel, also der Winkel welcher typischerweise kleiner als 90° ist, zwischen der Gewinderippe und dem zylindrischen Grundkörper vom Tiefenmaximum aus in beide sich entgegengesetzte Umfangsrichtungen verringern, insbesondere kontinuierlich verringern.

In einigen Ausführungsformen kann jede Gewinderippe an ihrer Basis, d.h. am Übergang zwischen der entsprechenden Gewinderippe und dem zylindrischen Grundkörper eine Breite, d.h. Ausdehnung in Axialrichtung aufweisen, welche sich von einem Breitenmaximum aus in beide sich entgegengesetzte Umfangsrichtungen verringert, insbesondere kontinuierlich verringert. Das Breitenmaximum einer Gewinderippe ist dabei ein Punkt an welchem die Breite der jeweiligen Gewinderippe ihren grössten Wert aufweist und an welchen vorzugsweise die Breite der jeweiligen Gewinderippe grösser ist als an jedem anderen Punkt entlang der Umfangsrichtung. Vorzugsweise sind das Tiefenmaximum und das Breitenmaximum jeder jeweiligen Gewinderippe an derselben Position, insbesondere derselben Position in Axialrichtung und Umfangsrichtung.

In einigen Ausführungsformen sind die mehreren Gewinderippen der Gewindeeinheit eingeteilt in eine erste Gruppe von mehreren in Axialrichtung versetzt zueinander angeordneten erste Gewinderippen und in eine zweite Gruppe von mehreren in Axialrichtung versetzt zueinander angeordneten zweiten Gewinderippen. Dabei sind die ersten Gewinderippen der ersten Gruppe in Umfangsrichtung versetzt zu den zweiten Gewinderippen der zweiten Gruppe angeordnet. Innerhalb jeder Gruppe sind die Gewinderippen jedoch in Umfangsrichtung zueinander unversetzt, sprich die ersten Gewinderippen sind in Umfangsrichtung zueinander unversetzt. In äquivalenter Weise sind die zweiten Gewinderippen in Umfangsrichtung zueinander unversetzt. Mit anderen Worten, sind die ersten Gewinderippen derart ausgebildet, dass sie allein durch Translation entlang der Axialrichtung kongruent ineinander überführt werden können. In äquivalenter Weise sind die zweiten Gewinderippen derart ausgebildet, dass sie allein durch Translation entlang der Axialrichtung kongruent ineinander überführt werden können. Ein Überführen einer ersten Gewinderippe in eine zweite Gewinderippe ist jedoch nicht allein durch Translation in Axialrichtung möglich, sondern benötigt aufgrund des Versatzes zudem eine Rotation um die Zylinderlängsachse.

In einigen Ausführungsformen sind sämtliche Tiefenmaxima der ersten Gewinderippen entlang der Axialrichtung untereinander angeordnet. Insbesondere befinden sich sämtliche Tiefenmaxima der ersten Gewinderippen auf einer Geraden die parallel zur Zylinderlängsachse verläuft.

In einigen Ausführungsformen sind sämtliche Tiefenmaxima der zweiten Gewinderippen entlang der Axialrichtung untereinander angeordnet. Insbesondere befinden sich sämtliche Tiefenmaxima der zweiten Gewinderippen auf einer Geraden die parallel zur Zylinderlängsachse verläuft.

In einigen Ausführungsformen liegen sich die Tiefenmaxima der ersten Gewinderippen und die Tiefenmaxima der zweiten Gewinderippen gegenüber, insbesondere diametral gegenüber. Dabei können die Tiefenmaxima der ersten Gewinderippen und die Tiefenmaxima der zweiten Gewinderippen sich derart gegenüber liegen, dass eine planare Ebene durch die die Tiefenmaxima der ersten Gewinderippen und die Tiefenmaxima der zweiten Gewinderippen und die Zylinderlängsachse gelegt werden kann.

In einigen Ausführungsformen liegen sich die Breitenmaxima der ersten Gewinderippen und die Breitenmaxima der zweiten Gewinderippen gegenüber, insbesondere diametral gegenüber. Dabei können die Breitenmaxima der ersten Gewinderippen und die Breitenmaxima der zweiten Gewinderippen sich derart gegenüber liegen, dass eine planare Ebene durch die die Breitenmaxima der ersten Gewinderippen und die Breitenmaxima der zweiten Gewinderippen und die Zylinderlängsachse gelegt werden kann.

In einigen Ausführungsformen sind die ersten Gewinderippen der ersten Gruppe und die zweiten Gewinderippen der zweiten Gruppe in zwei, insbesondere in höchstens zwei, Überlappungsbereichen entlang der Axialrichtung abwechselnd untereinander angeordnet. Ein Überlappungsbereich ist ein Bereich mit Ausdehnung in Umfangsrichtung und in Axialrichtung in welchem sich sowohl erste Gewinderippen der ersten Gruppe als auch zweite Gewinderippen der zweiten Gruppe befinden und die dabei in Axialrichtung abwechselnd untereinander angeordnet sind.

Vorzugsweise sind in einem ersten Gewinderippenbereich lediglich erste Gewinderippen der ersten Gruppe angeordnet und somit keine zweiten Gewinderippen der zweiten Gruppe, und in einem zweiten Gewinderippenbereich lediglich zweite Gewinderippen der zweiten Gruppe und somit keine ersten Gewinderippen der ersten Gruppe. Dabei ist der erste Gewinderippenbereich in Umfangsrichtung zwischen den beiden Überlappungsbereichen angeordnet. Ebenfalls ist der zweite Gewinderippenbereich in Umfangsrichtung zwischen den beiden Überlappungsbereichen angeordnet. Dabei sind jedoch der erste Gewinderippenbereich und der zweite Gewinderippenbereich im Umfangsrichtung jeweils von einem der beiden Überlappungsbereiche voneinander getrennt.

In einigen Ausführungsformen sind entlang der Axialrichtung im ersten Gewinderippenbereich nur die ersten Gewinderippen der ersten Gruppe untereinander angeordnet und im zweiten Gewinderippenbereich nur die zweiten Gewinderippen der zweiten Gruppe untereinander angeordnet. Vorzugsweise sind die Tiefenmaxima und/oder die Breitenmaxima der ersten Gewinderippen im ersten Gewinderippenbereich und die Tiefenmaxima und/oder die Breitenmaxima der zweiten Gewinderippen im zweiten Gewinderippenbereich angeordnet.

In einigen Ausführungsformen verringert sich die Tiefe jeder ersten Gewinderippe und jeder zweiten Gewinderippe in den Überlappungsbereichen bis auf die Höhe des zylindrischen Grundkörpers.

In einigen Ausführungsformen umfasst der erfindungsgemässe Heizkörper einen Grundkörper. Der Grundkörper definiert dabei vorzugsweise eine oder mehrere Fluidleitungen. Eine Fluidleitung kann dabei jeweils einen Fluideinlass und einen Fluidauslass aufweisen. Im Betrieb kann ein wärmetragendes Fluid, wie z.B. Wasser durch die eine oder mehrere Fluidleitungen geführt werden. Dieses wird typischerweise über den Fluideinlass in die entsprechende Fluidleitung eingebracht und über den Fluidauslass aus der Fluidleitung abgeführt.

In einigen Ausführungsformen umfasst der erfindungsgemässe Heizkörper einen Gewindering, welcher am Fluideinlass und/oder am Fluidauslass angeordnet ist. Bevorzugt ist sowohl am Fluideinlass als auch am Fluidauslass ein derartiger Gewindering angeordnet. Besonders bevorzugt ist an jedem Fluideinlass und an jedem Fluidauslass ein derartiger Gewindering angeordnet. Der Gewindering kann dabei entweder einstückig mit dem Grundkörper und insbesondere mit den Fluidleitungen ausgebildet sein. Bevorzugt ist jedoch der Gewindering separat ausgebildet. Der Gewindering ist dann vorzugsweise am Fluideinlass und/oder Fluidauslass montiert, insbesondere stoffschlüssig montiert, bevorzugt verschweisst.

Der Gewindering kann dabei ein Gewindering gemäss einer der hier beschriebenen Ausführungsformen, insbesondere der Ausführungsformen des zweiten Aspekts sein. Dies bedeutet, dass der Gewindering in diesem Fall den erfindungsgemässen Gewindekörper aufweist. Der erfindungsgemässe Gewindekörper ist ein Gewindekörper wie im ersten Aspekt beschrieben, d.h. dieser umfasst eine Gewindeeinheit, die einen rechtsgängigen Gewindegang und einen den rechtsgängigen Gewindegang überlagernden linksgängigen Gewindegang definiert. In derartigen Ausführungsformen kann mindestens einer dieser Gewinderinge mit einem Gewindenippel in Eingriff stehen. Auch wenn dies in einigen Ausführungsformen der Fall sein kann, muss der Gewindenippel bei solchen Ausführungsformen nicht zwingend ein erfindungsgemässer Gewindenippel sein, d.h. es muss kein Gewindenippel mit erfindungsgemässem Gewindekörper mit einer einen rechtsgängigen Gewindegang und einen den rechtsgängigen Gewindegang überlagernden linksgängigen Gewindegang definierenden Gewindeeinheit sein. Es reicht im Normalfall aus, wenn jeweils eines der beiden in Eingriff stehende Verbindungselemente, d.h. Gewindering und Gewindenippel einen erfindungsgemässen Gewindekörper aufweist. Das jeweilige andere Verbindungselement kann entsprechend nur einen rechtsgängigen oder nur einen linksgängigen Gewindegang aufweisen.

Alternativ ist es auch möglich, dass der am Fluideinlass und/oder am Fluidauslass angeordnete Gewindering ein Gewindering ist, der nur einen Gewindegang, d.h. nur einen rechtsgängigen oder nur einen linkgängigen Gewindegang definiert. In diesem Fall steht dieser Gewindering in Eingriff mit dem erfindungsgemässen Gewindekörper des Heizkörpers. Beispielsweise kann der Gewindering mit einem erfindungsgemässen Gewindenippel in Eingriff stehen, d.h. mit einem Gewindenippel mit dem Gewindekörper, der eine Gewindeeinheit aufweist, die einen rechtsgängigen Gewindegang und einen den rechtsgängigen Gewindegang überlagernden linksgängigen Gewindegang definiert. Dieser Gewindenippel kann dabei insbesondere als Stopfen oder Verbindungsnippel, d.h. als Gewindedoppelnippel mit dem erfindungsgemässen Gewindekörper, ausgebildet sein.

In einigen Ausführungsformen umfasst der erfindungsgemässe Heizkörper einen Gewindenippel, welcher am Fluideinlass und/oder am Fluidauslass angeordnet ist. Bevorzugt ist sowohl am Fluideinlass als auch am Fluidauslass ein derartiger Gewindenippel angeordnet. Besonders bevorzugt ist an jedem Fluideinlass und an jedem Fluidauslass ein derartiger Gewindenippel angeordnet. Der Gewindenippel kann dabei entweder einstückig mit dem Grundkörper und insbesondere einstückig mit den Fluidleitungen ausgebildet sein. Bevorzugt ist jedoch der Gewindenippel separat ausgebildet. Der Gewindenippel ist dann vorzugsweise am Fluideinlass und/oder Fluidauslass montiert, insbesondere stoffschlüssig montiert, bevorzugt verschweisst.

Der Gewindenippel kann dabei ein Gewindenippel gemäss einer der hier beschriebenen Ausführungsformen, insbesondere der Ausführungsformen des dritten Aspekts sein. Dies bedeutet, dass der Gewindenippel in diesem Fall den oder mindestens einen der erfindungsgemässen Gewindekörper aufweist. Der erfindungsgemässe Gewindekörper ist ein Gewindekörper wie im ersten Aspekt beschrieben, d.h. dieser umfasst eine Gewindeeinheit, die einen rechtsgängigen Gewindegang und einen den rechtsgängigen Gewindegang überlagernden linksgängigen Gewindegang definiert. In derartigen Ausführungsformen kann mindestens einer dieser Gewindenippel mit einem Gewindering in Eingriff stehen. Auch wenn dies in einigen Ausführungsformen der Fall sein kann, muss der Gewindering bei solchen Ausführungsformen kein erfindungsgemässer Gewindering sein, d.h. es muss kein Gewindering mit erfindungsgemässem Gewindekörper mit einer einen rechtsgängigen Gewindegang und einen den rechtsgängigen Gewindegang überlagernden linksgängigen Gewindegang definierenden Gewindeeinheit sein. Es reicht im Normalfall aus, wenn jeweils eines der beiden Verbindungselemente, d.h. Gewindering und Gewindenippel einen erfindungsgemässen Gewindekörper aufweist. Das jeweilige andere Verbindungselement kann entsprechend nur einen rechtsgängigen oder nur einen linksgängigen Gewindegang aufweisen.

Alternativ ist es auch möglich, dass der am Fluideinlass und/oder am Fluidauslass angeordnete Gewindenippel ein Gewindenippel ist, der nur einen Gewindegang, d.h. nur einen rechtsgängigen oder nur einen linkgängigen Gewindegang definiert. In diesem Fall steht dieser Gewindenippel in Eingriff mit dem erfindungsgemässen Gewindekörper des Heizkörpers. Beispielsweise kann der Gewindenippel mit einem erfindungsgemässen Gewindering in Eingriff stehen, d.h. mit einem Gewindering mit dem Gewindekörper, der eine Gewindeeinheit aufweist, die einen rechtsgängigen Gewindegang und einen den rechtsgängigen Gewindegang überlagernden linksgängigen Gewindegang definiert. Dieser Gewindering kann dabei als Stopfen ausgebildet sein.

Es ist im Allgemeinen möglich, dass an einigen Fluideinlässen und/oder an einigen Fluidauslässen des Heizkörpers derartige erfindungsgemässe Gewinderinge und an einigen Fluideinlässen und/oder an einigen Fluidauslässen des Heizkörpers derartige erfindungsgemässe Gewindenippel angeordnet sind. Auch ist es möglich, dass bei einem erfindungsgemässe Heizkörper an den Fluideinlässen und/oder an den Fluidauslässen ausschliesslich erfindungsgemässe Gewindenippel oder ausschliesslich erfindungsgemässe Gewinderinge angeordnet sind.

In einigen Ausführungsformen ist mindestens einer der Gewindenippel oder mindestens einer der Gewinderinge, insbesondere einer der erfindungsgemässen Gewindenippel oder erfindungsgemässen Gewinderinge, als Stopfen ausgebildet. Der Fachmann versteht, dass ein Stopfen dazu ausgelegt ist, einen Fluideinlass oder einen Fluidauslass fluiddicht zu verschliessen.

Bei einem erfindungsgemässen Heizkörper ist bevorzugt mindestens einer oder zwei des mindestens einen Fluideinlasses und/oder des mindestens einen Fluidauslasses mit einem als Stopfen ausgebildeten Gewindenippel oder mit einem als Stopfen ausgebildeten Gewindering verschlossen. Beispielsweise ist es möglich, dass an dem entsprechenden mindestens einen Fluideinlass und/oder mindestens einem Fluidauslass ein erfindungsgemässer Gewindering angeordnet ist, d.h. mit erfindungsgemässen Gewindekörper mit Gewindeeinheit, die einen rechtsgängigen Gewindegang und einen den rechtsgängigen Gewindegang überlagernden linksgängigen Gewindegang definiert. Ein solcher Gewindering kann dann in Eingriff mit einem als Stopfen ausgebildeten Gewindenippel stehen, sodass der entsprechende Fluideinlass oder Fluidauslass fluiddicht verschlossen ist. Alternativ ist es möglich, dass an dem entsprechenden mindestens einen Fluideinlass und/oder mindestens einem Fluidauslass ein Gewindering angeordnet ist, der lediglich einen rechtsgängigen oder lediglich einen linksgängigen Gewindegang definiert. In solchen Fällen steht dieser Gewindering dann mit einen erfindungsgemässen Gewindenippel in Eingriff, der als Stopfen ausgebildet ist, sodass der entsprechende Fluideinlass oder Fluidauslass fluiddicht verschlossen ist. Dies bedeutet, dass der erfindungsgemässe Gewindenippel einen erfindungsgemässen Gewindekörper mit Gewindeeinheit, die einen rechtsgängigen Gewindegang und einen den rechtsgängigen Gewindegang überlagernden linksgängigen Gewindegang definiert, aufweist.

In einigen Ausführungsformen kann der erfindungsgemässe Gewindenippel ein Gewindedoppelnippel sein. Insbesondere kann ein derartiger Gewindedoppelnippel zwei voneinander getrennte Gewindeeinheiten aufweisen, wobei jede Gewindeeinheit jeweils einen rechtsgängigen Gewindegang und einen den rechtsgängigen Gewindegang überlagernden linksgängigen Gewindegang definiert.

In Ausführungsformen bei welchen der Gewindekörper Teil eines Gewinderings mit Flansch ist, kann der Flansch mit dem Grundkörper des Heizkörpers, bzw. mit den Fluideinlass oder Fluidauslass, stoffschlüssig verbunden sein, insbesondere verschweisst sein. Dies erhöht die Fluiddichtigkeit des Heizkörpers.

In einigen Ausführungsformen der erfindungsgemässen Heizkörpereinheit, sind alle Heizkörper der Heizkörpereinheit Heizkörper gemäss einer der hier beschriebenen Ausführungsformen.

In einigen Ausführungsformen der erfindungsgemässen Heizkörpereinheit sind die Heizkörper untereinander mittels einem oder mehreren Verbindungsnippel miteinander verbunden. Der Verbindungsnippel kann dabei ein erfindungsgemässer Gewindedoppelnippel sein. Der Verbindungsnippel kann dabei einen oder zwei erfindungsgemässe Gewindekörper aufweisen, also ein Gewindekörper umfassend eine Gewindeeinheit, die einen rechtsgängigen Gewindegang und einen den rechtsgängigen Gewindegang überlagernden linksgängigen Gewindegang definiert. Für den Fall dass der Verbindungsnippel ein erfindungsgemässer Gewindedoppelnippel ist, kann in einigen bevorzugten Ausführungsformen am jeweiligen Fluideinlass oder Fluidauslass an den der Gewindedoppelnippel angeschlossen ist, ein entsprechender Gewindering angeordnet sein. Alternativ ist es möglich, dass der Verbindungsnippel ein Gewindedoppelnippel ist, welcher zwei voneinander getrennte Gewindeeinheiten aufweist, von denen eine nur einen rechtsgängige Gewindegang und eine nur einen linksgängigen Gewindegang definiert.

Das Verfahren zur Herstellung eines erfindungsgemässen Heizkörpers umfasst in einigen Ausführungsformen die Schritte: 1) Bereitstellen eines Grundkörpers umfassend eine oder mehrere Fluidleitungen, wobei jede Fluidleitung mindestens einen Fluideinlass und mindestens eine Fluidauslass aufweist; und 2) Anordnen eines erfindungsgemässen Gewindekörpers, insbesondere eines Gewindekörpers gemäss einer der hier beschriebene Ausführungsformen an dem mindestens einem Fluideinlass und/oder an dem mindestens einen Fluidauslass. Vorzugsweise umfasst das Anordnen ein stoffschlüssiges Verbinden, insbesondere durch Schweissen.

In einigen Ausführungsformen umfasst das Verfahren den Schritt: 3) In Eingriff bringen eines Stopfens mit dem angeordneten Gewindekörper, insbesondere durch eindrehen.

Alternativ kann das Verfahren zur Herstellung eines erfindungsgemässen Heizkörpers die Schritte umfassen: 1) Bereitstellen eines Grundkörpers umfassend eine oder mehrere Fluidleitungen, wobei jede Fluidleitung mindestens einen Fluideinlass und mindestens eine Fluidauslass aufweist; und 2) Anordnen eines Gewindekörpers an dem mindestens einem Fluideinlass; und 3) In Eingriff bringen eines Stopfens umfassend einen erfindungsgemässen Gewindekörper mit dem angeordneten Gewindekörper, insbesondere durch eindrehen. In derartigen Ausführungsformen kann der Gewindekörper in Schritt 2) lediglich einen rechtsgängigen oder lediglich einen linksgängigen Gewindegang aufweisen, bzw. definieren. Der Stopfen aus Schritt 3) kann dabei z.B. ein als Stopfen ausgebildeter erfindungsgemässer Gewindering oder ein als Stopfen ausgebildeter erfindungsgemässer Gewindenippel sein.

Die nachfolgenden Ausführungsbeispiele offenbaren ebenfalls Aspekte der Erfindung:
Ein erstes Ausführungsbeispiel bezieht sich auf einen Gewindekörper für einen Heizkörper umfassend einen zylindrischen Grundkörper mit einer in Axialrichtung verlaufenden Zylinderlängsachse und eine entlang dem zylindrischen Grundkörper verlaufende Gewindeeinheit, wobei die Gewindeeinheit einen rechtsgängigen Gewindegang und einen den rechtsgängigen Gewindegang überlagernden linksgängigen Gewindegang definiert.

Ein zweites Ausführungsbeispiel bezieht sich auf den Gewindekörper des ersten Ausführungsbeispiels, wobei die Gewindeeinheit eine Innengewindeeinheit mit einem rechtsgängigen Innengewindegang und einem den rechtsgängigen Innengewindegang überlagernden linksgängigen Innengewindegang ist; oder wobei die Gewindeeinheit eine Aussengewindeeinheit mit einem rechtsgängigen Aussengewindegang und ein den rechtsgängigen Aussengewindegang überlagernden linksgängigen Aussengewindegang ist.

Ein drittes Ausführungsbeispiel bezieht sich auf den Gewindekörper des ersten oder zweiten Ausführungsbeispiels, wobei die Gewindeeinheit mehrere vom zylindrischen Grundkörper vorstehende Gewinderippen umfasst, wobei jede Gewinderippe eine Tiefe aufweist, welche sich von einem Tiefenmaximum aus in beide sich entgegengesetzte Umfangsrichtungen verringert, insbesondere kontinuierlich verringert.

Ein viertes Ausführungsbeispiel bezieht sich auf den Gewindekörper des dritten Ausführungsbeispiels, wobei sich die Tiefe jeder Gewinderippe in beide Umfangsrichtungen bis auf die Höhe des zylindrischen Grundkörpers verringert.

Ein fünftes Ausführungsbeispiel bezieht sich auf den Gewindekörper des dritten oder vierten Ausführungsbeispiels, wobei jede Gewinderippe im Querschnitt trapezförmig und/oder dreieckig ausgebildet ist, wobei sich bei jeder Gewinderippe der Innenwinkel zwischen der Gewinderippe und dem zylindrischen Grundkörper vom Tiefenmaximum aus in beide sich entgegengesetzte Umfangsrichtungen verringert, insbesondere kontinuierlich verringert.

Ein sechstes Ausführungsbeispiel bezieht sich auf den Gewindekörper gemäss dem dritten bis fünften Ausführungsbeispiel, wobei jede Gewinderippe eine Breite aufweist, welche sich von einem Breitenmaximum aus in beide sich entgegengesetzte Umfangsrichtungen verringert, insbesondere kontinuierlich verringert, wobei vorzugsweise das Breitenmaximum und das Tiefenmaximum an derselben Position angeordnet sind.

Ein siebtes Ausführungsbeispiel bezieht sich auf den Gewindekörper gemäss dem dritten bis sechsten Ausführungsbeispiel, wobei die mehreren Gewinderippen der Gewindeeinheit eingeteilt sind in: (a) eine erste Gruppe von mehreren in Axialrichtung versetzt zueinander angeordneten erste Gewinderippen; (b) eine zweite Gruppe von mehreren in Axialrichtung versetzt zueinander angeordneten zweite Gewinderippen; wobei die ersten Gewinderippen der ersten Gruppe in Umfangsrichtung versetzt zu den zweiten Gewinderippen der zweiten Gruppe angeordnet sind.

Ein achtes Ausführungsbeispiel bezieht sich auf den Gewindekörper des siebten Ausführungsbeispiels, wobei sämtliche Tiefenmaxima der ersten Gewinderippen entlang der Axialrichtung untereinander angeordnet sind und/oder wobei sämtliche Tiefenmaxima der zweiten Gewinderippen entlang der Axialrichtung untereinander angeordnet sind.

Ein neuntes Ausführungsbeispiel bezieht sich auf den Gewindekörper des siebten oder achten Ausführungsbeispiels, wobei die ersten Gewinderippen der ersten Gruppe und die zweiten Gewinderippen der zweiten Gruppe in zwei Überlappungsbereichen entlang der Axialrichtung abwechselnd untereinander angeordnet sind.

Ein zehntes Ausführungsbeispiel bezieht sich auf den Gewindekörper des neunten Ausführungsbeispiels wobei sich die Tiefe jeder ersten Gewinderippe und jeder zweiten Gewinderippe in den Überlappungsbereichen bis auf die Höhe des zylindrischen Grundkörpers verringert.

Ein elftes Ausführungsbeispiel bezieht sich auf den Gewindekörper des neunten oder zehnten Ausführungsbeispiels, wobei entlang der Axialrichtung in einem ersten Gewinderippenbereich nur die ersten Gewinderippen der ersten Gruppe untereinander angeordnet sind und in einem zweiten Gewinderippenbereich nur die zweiten Gewinderippen der zweiten Gruppe untereinander angeordnet sind, wobei vorzugsweise die Tiefenmaxima der ersten Gewinderippen im ersten Gewinderippenbereich und die Tiefenmaxima der zweiten Gewinderippen im zweiten Gewinderippenbereich angeordnet sind.

Ein zwölftes Ausführungsbeispiel bezieht sich auf einen Gewindering umfassend einen Gewindekörper gemäss einem der Ausführungsbeispiele eins bis elf, und optional einen daran angeordneten Flansch.

Ein dreizehntes Ausführungsbeispiel bezieht sich auf einen Gewindenippel umfassend einen Gewindekörper gemäss einem der Ausführungsbeispiele eins bis elf.

Ein vierzehntes Ausführungsbeispiel bezieht sich auf einen Heizkörper umfassend einen Gewindekörper gemäss einem der Ausführungsbeispiele eins bis elf oder einen Gewindering gemäss Ausführungsbeispiel zwölf oder einen Gewindenippel gemäss Ausführungsbeispiel dreizehn.

Verwendung eines Gewindekörpers gemäss einem der Ausführungsbeispiele eins bis elf oder eines Gewinderings gemäss Ausführungsbeispiel zwölf oder eines Gewindenippels gemäss Ausführungsbeispiel dreizehn zur Montage eines Heizkörpers, insbesondere zum Verschluss oder Verbinden von Fluidleitungen des Heizkörpers.

### Kurze Erläuterung der Figuren

Anhand der in den nachfolgenden Figuren gezeigten spezifischen Ausführungsbeispielen und der dazugehörigen Beschreibung werden Aspekte der Erfindung näher erläutert. Die in den Figuren gezeigten Ausführungsbeispiele sind hierbei nicht einschränkend für die in den Ansprüchen beschriebene Erfindung zu verstehen.
- Fig. 1: zeigt eine perspektivische Darstellung eines Gewinderings mit Gewindekörper wie er in einigen Ausführungsformen der Erfindung eingesetzt werden kann;
- Fig. 2: zeigt ein Querschnitt des Gewinderings aus Fig. 1;
- Fig. 3: zeigt eine perspektivische teilgeschnittene Darstellung eines Gewinderings mit Gewindekörper wie er in einigen Ausführungsformen der Erfindung eingesetzt werden kann;
- Fig. 4: zeigt eine seitliche Sicht auf eine die teilgeschnittene Darstellung aus Fig. 3;
- Fig. 5: zeigt eine weitere seitliche Sicht auf eine die teilgeschnittene Darstellung aus Fig. 3;
- Fig. 6: zeigt eine seitliche Sicht auf einen Gewindenippel mit Gewindekörper wie er in einigen Ausführungsformen der Erfindung eingesetzt werden kann ;
- Fig. 7: zeigt eine weitere seitliche Sicht auf den Gewindenippel aus Fig. 6;
- Fig. 8: zeigt eine Explosionsdarstellung eines Heizkörpers gemäss einer Ausführungsform der Erfindung.

### Wege zur Ausführung der Erfindung

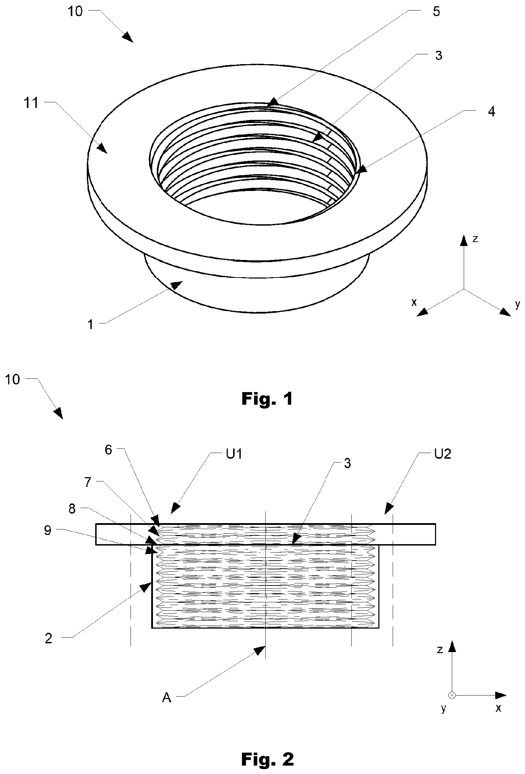

Fig. 1 zeigt einen Gewindering 10 mit Flansch 11 und Gewindekörper 1. Der Gewindekörper 1 umfasst dabei einen tubulären zylindrischen Grundkörper (nicht bezeichnet, siehe Fig. 2) mit einer in z-Richtung, d.h. in Axialrichtung, verlaufenden Zylinderlängsachse. Zudem umfasst der Gewindekörper 1 eine Gewindeeinheit 3, welche einen rechtsgängigen Gewindegang 4 und einen den rechtsgängigen Gewindegang 4 überlagernden linksgängigen Gewindegang 5 definiert. Wie ersichtlich ist, sind der rechtsgängige und der linksgängige Gewindegang überlagert, d.h. sie verlaufen beide auf derselben Seite, in diesem Fall der Innenfläche des tubulären zylindrischen Grundkörpers und weisen zudem entlang der Zylinderlängsachse dieselbe Ausdehnung auf uns die entsprechenden Gewinderippen stehen alle radial nach Innen vor, d.h. zur Zylinderlängsachse hin. Bei dem dargestellten Gewindekörper 1 handelt es sich um einen weiblichen Gewindekörper in welchen aufgrund der Anordnung des rechtsgängigen Gewindegangs 4 und des linksgängigen Gewindegangs 5 sowohl ein korrespondierendes männliches rechtsgängiges Gegengewinde als auch ein korrespondierendes linksgängiges Gegengewinde eindreht werden kann. Ein derartiger Gewindering 10 kann beispielsweise an einen Fluideinlass eines Heizkörpers angeschweisst sein.

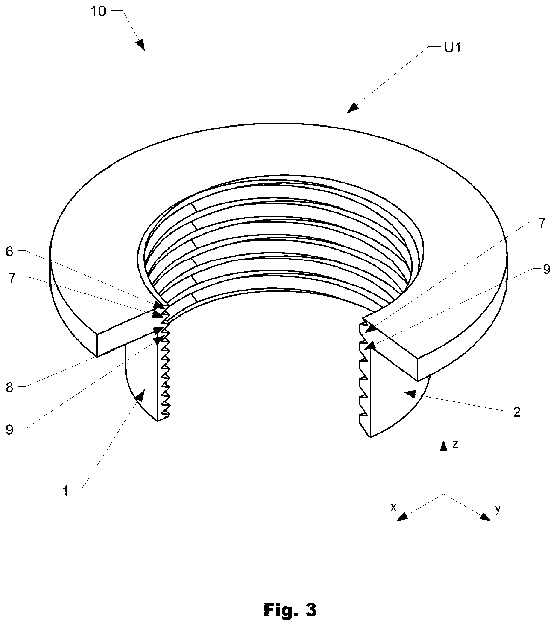

Fig. 2 zeigt einen Querschnitt des Gewinderings 10 aus Fig. 1. Dabei ist ersichtlich, dass die Gewindeeinheit 3 entlang der Innenfläche des tubulären zylindrischen Grundkörper verläuft. Die Gewindeeinheit 3 des Gewindekörpers umfasst dabei mehrere vom zylindrischen Grundkörper 2 vorstehende Gewinderippen 6, 7, 8 und 9 (zur besseren Deutlichkeit sind nur vier der Gewinderippen mit Bezugszeichen versehen). Der Schnitt verläuft dabei jeweils durch die beiden Überlappungsbereiche U 1 und U2 was bei Vergleich mit Fig. 3 dadurch ersichtlich ist, dass die Anzahl der Gewinderippen 6, 7, 8 und 9 in diesen Bereichen aufgrund abwechselnd untereinander angeordneten ersten Gewinderippen 7 und 9 der ersten Gruppe und zweiten Gewinderippen 6 und 8 der zweiten Gruppe im Vergleich zum ersten Gewinderippenbereich, wo nur die ersten Gewinderippen angeordnet sind und zum zweiten Gewindebereich, wo nur die zweiten Gewinderippen angeordnet sind, deutlich erhöht, insbesondere verdoppelt, ist. Dabei ist ersichtlich, dass die ersten Gewinderippen 7 und 9 der ersten Gruppe und die zweiten Gewinderippen 6 und 8 der zweiten Gruppe in den Überlappungsbereichen jeweils in Axialrichtung, also der z-Richtung, abwechselnd untereinander angeordnet sind. Wie dargestellt, ist von oben nach unten zuerst die zweite Gewinderippe 6 der zweiten Gruppe, dann die erste Gewinderippe 7 der ersten Gruppe, dann wieder zweite Gewinderippe 8 der zweiten Gruppe, usw. angeordnet. Mit anderen Worten ist im Überlappungsbereich dabei mit Ausnahme der jeweiligen endständigen Gewinderippen eine erste Gewinderippe zwischen zwei zweiten Gewinderippen angeordnet und umgekehrt.

In der Fig. 3 ist eine teilgeschnittene perspektivische Darstellung eines erfindungsgemässen Gewinderings 10 mit Gewindekörper 1 gezeigt. Die Gewindeeinheit 3 verläuft dabei auf der Innenfläche des tubulären zylindrischen Grundkörpers 2 und weist mehrere vom zylindrischen Grundkörper nach Innen vorstehende Gewinderippen 6, 7, 8 und 9 (zur besseren Deutlichkeit sind nur vier der Gewinderippen mit Bezugszeichen versehen) auf, welche dabei einen rechtsgängigen Gewindegang und einen diesen überlagernden linksgängigen Gewindegang definieren. Der Schnitt verläuft dabei teilweise durch den zweiten Überlappungsbereich (siehe linke Schnittseite), in welchem die ersten Gewinderippen 7 und 9 der ersten Gruppe und die zweiten Gewinderippe 6 und 8 der zweiten Gruppe in den Überlappungsbereichen jeweils in Axialrichtung, also der z-Richtung, abwechselnd untereinander angeordnet sind. Im weiteren Verlauf in positiver und negativer Umfangsrichtung fallen dabei jeweils die ersten oder die zweiten Gewinderippen ab, während die Tiefe der Gewinderippen der entsprechenden anderen Gruppe in diese Richtung zunimmt. Dies wird an der rechten Schnittseite ersichtlich, wo nur noch die ersten Gewinderippen der ersten Gruppe angeordnet sind und daher keine zweiten Gewinderippen mehr vorhanden sind. Somit ist die gezeigte rechte Schnittstelle der Schnitts entsprechend im ersten Gewinderippenbereich angeordnet. Dieser erste Gewinderippenbereich ist dabei in Umfangsrichtung zwischen dem ersten Überlappungsbereich U1 und dem zweiten Überlappungsbereich angeordnet durch welchen entsprechend der Schnitt verläuft. Erkennbar ist dabei, dass die Tiefe der ersten Gewinderippe 7 im erste Gewinderippenbereich (rechte Schnittstelle des Schnitts) grösser ist als ihre Tiefe im zweiten Überlappungsbereich (linke Schnittstelle des Schnitts) und auch im ersten Überlappungsbereich U1. Die Tiefe ist dabei der Vorstand der Rippe vom zylindrischen Grundkörper 2 aus nach Innen in Richtung der Zylinderlängsachse. Des Weiteren ist ersichtlich, dass die Breite der Gewinderippen entsprechend von einem Breitenmaximum aus, welches bei der ersten Gewinderippe 7 im ersten Gewinderippenbereich (rechte Schnittstelle des Schnitts) angeordnet ist, in beide entgegensetzte Umfangsrichtungen abnimmt. Deutlich wird dies unter anderem im zweiten Überlappungsbereich (linke Schnittstelle des Schnitts). Im ersten Überlappungsberiech U1 ist deutlich erkennbar, dass in den Überlappungsbereichen abwechselnd untereinander erste Gewinderippen und zweite Gewinderippen angeordnet sind und sich die Tiefe jeder Rippe bis auf die Höhe, d.h. das Level, des zylindrischen Grundkörpers verringert, wodurch in einfacher Weise ein korrespondierendes rechtsgängiges aber auch ein korrespondierendes linksgängiges Gegengewinde formschlüssig mit dem Gewindekörper 1 verbunden werden kann.

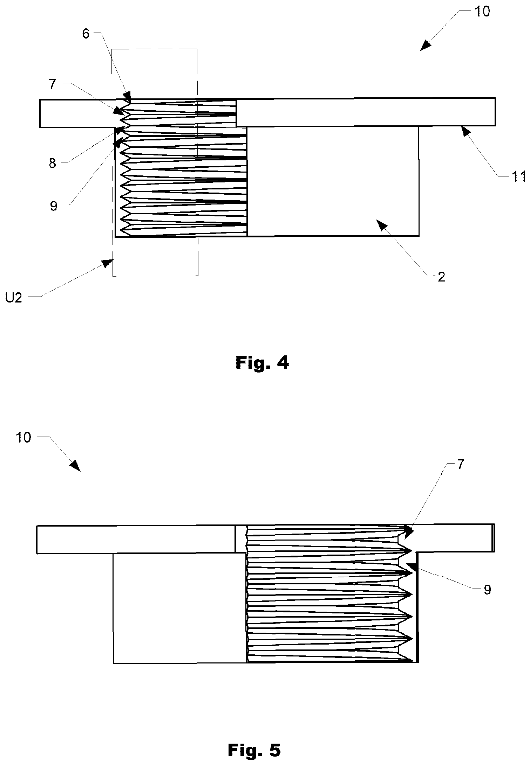

In der Fig. 4 und 5 ist jeweils eine Seitenansicht auf den teilweise geschnittenen Gewindering 10 aus Fig. 3 dargestellt. In Fig. 3 sind dabei die Gewinderippen 6, 7, 8 und 9 gezeigt, wobei die Gewinderippe 6 und 8 zweite Gewinderippen der zweiten Gruppe und die Gewinderippen 7 und 9 erste Gewinderippen der ersten Gruppe sind. Diese sind im zweiten Überlappungsbereich U2, durch welchen der Schnitt verläuft, abwechselnd in Axialrichtung untereinander angeordnet, d.h. entlang der Axialrichtung folgt auf eine erste Gewinderippe der ersten Gruppe eine zweite Gewinderippe der zweiten Gruppe und umgekehrt. In der Figur 5 hingegen ist der Schnitt durch den ersten Gewinderippenbereich gezeigt, in welchem nur erste Gewinderippen der erste Gruppe angeordnet sind. Es zeigt sich, dass sowohl die Tiefe, also der Vorstand der Gewinderippen 7 und 9 vom zylindrischen Grundkörper 2 zur Zylinderlängsachse hin deutlich grösser ist als im zweiten Überlappungsbereich (Fig. 4). In gleicher Weise ist die Breite, also die Ausdehnung jeder Gewinderippe entlang der Zylinderlängsachse am Übergang zum zylindrischen Grundkörper, insbesondere der Innenfläche, jeder Gewinderippe im ersten Gewinderippenbereich deutlich grösser als im zweiten Überlappungsbereich U2.

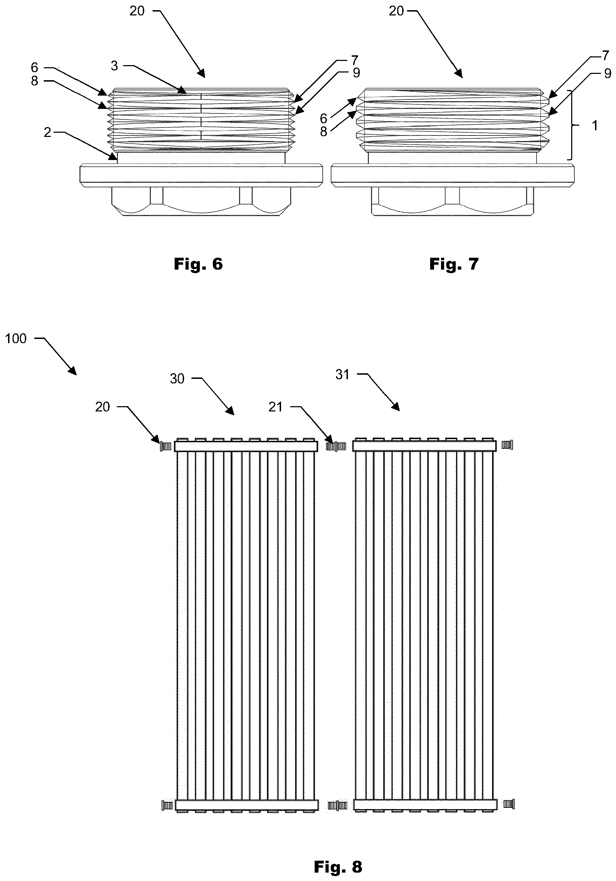

In den Figuren 6 und 7 ist ein erfindungsgemässer Gewindenippel 20 gezeigt, welcher in der Fig. 7 um 90° gedreht zur Ansicht der Fig. 6 dargestellt ist. Der Gewindenippel 20 weist dabei einen Gewindekörper 1 mit zylindrischen Grundkörper 2 und eine entlang dessen Mantelfläche, d.h. auf seiner Aussenseite, verlaufenden und darauf angeordneten Gewindeeinheit 3 auf. Es ist erkennbar, dass die Gewindeeinheit 3 ebenfalls einen rechtsgängigen und einen den rechtsgängigen überlagernden linksgängigen Gewindegang definiert. In der Fig. 6 ist dabei in der Profilansicht ersichtlich, dass auf der rechten und linken Seite deutlich mehr Gewinderippen angeordnet sind als seitlich in der Fig. 7. Dies ist dadurch begründet, dass in der Fig. 6 seitlich der erste und zweite Überlappungsbereich angeordnet ist, wo sowohl erste Gewinderippen der ersten Gruppe, wie z.B. Gewinderippen 7 und 9, und zweite Gewinderippen der zweiten Gruppe, wie z.B. Gewinderippen 6 und 8, untereinander in Axialrichtung angeordnet sind. In der Darstellung der Fig. 7 hingegen sind auf der rechten und linken Seite jeweils nur der erste Gewinderippenbereich, bzw. der zweite Gewinderippenbereich angeordnet. So sind auf der linken Seite nur zweite Gewinderippen der zweiten Gruppe, wie z.B. Gewinderippen 6 und 8, und auf der rechten Seite nur erste Gewinderippen der ersten Gruppe, wie z.B. Gewinderippen 7 und 9, angeordnet. Insbesondere sind an diesen Positionen die Tiefenmaxima und Breitenmaxima der ersten, bzw. zweiten Gewinderippen erkennbar. Ein derartiger Gewindenippel kann dabei sowohl in ein handelsübliches linksgängiges oder rechtsgängiges weibliches Gegengewinde formschlüssig eingebracht werden.

In der Figur 8 ist eine Heizkörpereinheit als teilweise Explosionsdarstellung gezeigt, die sich aus zwei miteinander verbundenen Heizkörpern 30 und 31 zusammensetzt. Die Heizkörper 30 und 32 werden über zwei Verbindungsnippel miteinander verbunden. Die Verbindungsnippel sind Doppelnippel und weisen ein rechtsgängiges und ein linksgängige Gewinde auf. Allerdings überlagern sich diese Gewindegänge nicht, sondern sind an separaten Positionen, nämlich gegenüberliegend, auf dem Verbindungsnippel angeordnet. Die Fluidleitungen können dabei endständig mit einem erfindungsgemässen Verbindungsnippel 20, wie er z.B. in der Fig. 6 und 7 gezeigt ist, verschlossen werden. Dabei spielt es keine Rolle, ob das entsprechende weibliche Gegengewinde, welches Gewindenippel 20 aufnimmt, rechtsgängig oder linksgängig ist. Anstelle des erfindungsgemässen Gewindenippels 20 kann auch ein erfindungsgemässer Gewindering zusammen mit einem handelsüblichen rechtsgängigen oder linksgängigen Gewindenippel verwendet werden, um denselben Vorteil zu erreichen.

### Liste der Bezugszeichen

- 1: Gewindekörper
- 2: zylindrischer Grundkörper
- 3: Gewindeeinheit
- 4: rechtsgängiger Gewindegang
- 5: linksgängiger Gewindegang
- 6, 8: (zweite) Gewinderippen
- 7, 9: (erste) Gewinderippen
- 10: Gewindering
- 11: Flansch
- 20: Gewindenippel
- 21: Verbindungsnippel
- 30, 31: Heizkörper
- 100: Heizkörpereinheit
- U1: erster Überlappungsbereich
- U2: zweiter Überlappungsbereich

## Patentansprüche

1. Heizkörper (30, 31) umfassend einen oder mehrere Gewindekörper (1), wobei der Gewindekörper umfasst:
a. einen zylindrischen Grundkörper (2) mit einer in Axialrichtung verlaufenden Zylinderlängsachse (A); und
b. eine entlang dem zylindrischen Grundkörper (2) verlaufende Gewindeeinheit (3), wobei die Gewindeeinheit (3) einen rechtsgängigen Gewindegang (4) und einen den rechtsgängigen Gewindegang (4) überlagernden linksgängigen Gewindegang (5) definiert.

2. Heizkörper (30, 31) nach Anspruch 1, wobei die Gewindeeinheit (3) eine Innengewindeeinheit mit einem rechtsgängigen Innengewindegang und einem den rechtsgängigen Innengewindegang überlagernden linksgängigen Innengewindegang ist; oder wobei die Gewindeeinheit (3) eine Aussengewindeeinheit mit einem rechtsgängigen Aussengewindegang und ein den rechtsgängigen Aussengewindegang überlagernden linksgängigen Aussengewindegang ist.

3. Heizkörper (30, 31) nach Anspruch 1 oder 2, wobei die Gewindeeinheit (3) mehrere vom zylindrischen Grundkörper (2) vorstehende Gewinderippen (6, 7, 8, 9) umfasst, wobei jede Gewinderippe (6, 7, 8, 9) eine Tiefe aufweist, welche sich von einem Tiefenmaximum aus in beide sich entgegengesetzte Umfangsrichtungen verringert, insbesondere kontinuierlich verringert.

4. Heizkörper (30, 31) nach Anspruch 3, wobei sich die Tiefe jeder Gewinderippe (6, 7, 8, 9) in beide Umfangsrichtungen bis auf die Höhe des zylindrischen Grundkörpers (2) verringert.

5. Heizkörper (30, 31) nach Anspruch 3 oder 4, wobei jede Gewinderippe (6, 7, 8, 9) im Querschnitt trapezförmig und/oder dreieckig ausgebildet ist, wobei sich bei jeder Gewinderippe (6, 7, 8, 9) der Innenwinkel zwischen der Gewinderippe (6, 7, 8, 9) und dem zylindrischen Grundkörper (2) vom Tiefenmaximum aus in beide sich entgegengesetzte Umfangsrichtungen verringert, insbesondere kontinuierlich verringert.

6. Heizkörper (30, 31) nach einem der Ansprüche 3 bis 5, wobei jede Gewinderippe (6, 7, 8, 9) eine Breite aufweist, welche sich von einem Breitenmaximum aus in beide sich entgegengesetzte Umfangsrichtungen verringert, insbesondere kontinuierlich verringert, wobei vorzugsweise das Breitenmaximum und das Tiefenmaximum an derselben Position angeordnet sind.

7. Heizkörper (30, 31) nach einem der Ansprüche 3 bis 6, wobei die mehreren Gewinderippen (6, 7, 8, 9) der Gewindeeinheit eingeteilt sind in:
a. eine erste Gruppe von mehreren in Axialrichtung versetzt zueinander angeordneten erste Gewinderippen (7, 9);
b. eine zweite Gruppe von mehreren in Axialrichtung versetzt zueinander angeordneten zweite Gewinderippen (6, 8);
wobei die ersten Gewinderippen (7, 9) der ersten Gruppe in Umfangsrichtung versetzt zu den zweiten Gewinderippen (6, 8) der zweiten Gruppe angeordnet sind.

8. Heizkörper (30, 31) nach Anspruch 7, wobei sämtliche Tiefenmaxima der ersten Gewinderippen (7, 9) entlang der Axialrichtung untereinander angeordnet sind und/oder wobei sämtliche Tiefenmaxima der zweiten Gewinderippen (6, 8) entlang der Axialrichtung (A) untereinander angeordnet sind.

9. Heizkörper (30, 31) nach Anspruch 7 oder 8, wobei die ersten Gewinderippen (7, 9) der ersten Gruppe und die zweiten Gewinderippen (6, 8) der zweiten Gruppe in zwei Überlappungsbereichen (U1, U2) entlang der Axialrichtung (A) abwechselnd untereinander angeordnet sind.

10. Heizkörper (30, 31) nach Anspruch 9, wobei sich die Tiefe jeder ersten Gewinderippe (7, 9) und jeder zweiten Gewinderippe (6, 8) in den Überlappungsbereichen (U1, U2) bis auf die Höhe des zylindrischen Grundkörpers (2) verringert.

11. Heizkörper (30, 31) nach Anspruch 9 oder 10, wobei entlang der Axialrichtung in einem ersten Gewinderippenbereich nur die ersten Gewinderippen (7, 9) der ersten Gruppe untereinander angeordnet sind und in einem zweiten Gewinderippenbereich nur die zweiten Gewinderippen (6, 8) der zweiten Gruppe untereinander angeordnet sind, wobei vorzugsweise die Tiefenmaxima der ersten Gewinderippen (7, 9) im ersten Gewinderippenbereich und die Tiefenmaxima der zweiten Gewinderippen (6, 8) im zweiten Gewinderippenbereich angeordnet sind.

12. Heizkörper (30, 31) nach einem der vorherigen Ansprüche umfassend einen Gewindering (10), wobei der Gewindering (10) den Gewindekörper (1) und optional einen daran angeordneten Flansch (11) umfasst.

13. Heizkörper (30, 31) nach einem der vorherigen Ansprüche umfassend einen Gewindenippel (20), wobei der Gewindenippel (20) den Gewindekörper (1) umfasst.

14. Heizkörpereinheit umfassend mehrere miteinander verbundene Heizkörper (30, 31), wobei mindestens einer der Heizkörper (30, 31) ein Heizkörper gemäss einem der vorherigen Ansprüchen ist.

15. Heizkörpereinheit nach Anspruch 14, wobei die Heizkörper (30, 31) untereinander mittels einem oder mehreren Verbindungsnippel miteinander verbunden sind.

16. Verwendung eines Gewindenippels, insbesondere eines als Stopfen ausgebildeten Gewindenippels, in einem Heizkörper nach einem der Ansprüche 1 bis 13 oder in einer Heizkörpereinheit nach einem der Ansprüche 14 oder 15.

## Claims

1. A heating device (30, 31) comprising one or more threaded bodies (1), wherein the threaded body comprises:
a. a cylindrical base body (2) with a longitudinal cylinder axis (A) extending in axial direction; and
b. a thread unit (3) extending along the cylindrical base body (2), the thread unit (3) defining a right-hand thread (4) and a left-hand thread (5) superimposing the right-hand thread (4).

2. Heating device (30, 31) according to claim 1, wherein the thread unit (3) is an inner thread unit with a right-handed inner thread and a left-handed inner thread superimposed on the right-handed inner thread; or wherein the thread unit (3) is an outer thread unit with a right-handed outer thread and a left-handed outer thread superimposed on the right-handed outer thread.

3. Heating device (30, 31) according to claim 1 or 2, wherein the thread unit (3) comprises a plurality of thread ribs (6, 7, 8, 9) projecting from the cylindrical base body (2), wherein each thread rib (6, 7, 8, 9) has a depth which decreases, in particular continuously decreases, from a maximum depth in both opposite circumferential directions.

4. Heating device (30, 31) according to claim 3, wherein the depth of each thread rib (6, 7, 8, 9) decreases in both circumferential directions down to the height of the cylindrical base body (2).

5. Heating device (30, 31) according to claim 3 or 4, wherein each thread rib (6, 7, 8, 9) is trapezoidal and/or triangular in cross section, wherein in each thread rib (6, 7, 8, 9) the inner angle between the thread rib (6, 7, 8, 9) and the cylindrical base body (2) decreases, in particular continuously, from the maximum depth in both opposite circumferential directions.

6. Heating device (30, 31) according to one of claims 3 to 5, wherein each thread rib (6, 7, 8, 9) has a width which decreases, in particular continuously decreases, from a width maximum in both circumferential directions opposite to each other, wherein preferably the width maximum and the depth maximum are arranged at the same position.

7. Heating device (30, 31) according to any one of claims 3 to 6, wherein the plurality of thread ribs (6, 7, 8, 9) of the thread unit are divided into:
a. a first group of a plurality of first thread ribs (7, 9) arranged offset from one another in the axial direction;
b. a second group of a plurality of second thread ribs (6, 8) arranged offset to one another in the axial direction;
wherein the first thread ribs (7, 9) of the first group are arranged offset from the second thread ribs (6, 8) of the second group in the circumferential direction.

8. Heating device (30, 31) according to claim 7, wherein all depth maxima of the first thread ribs (7, 9) are arranged one below the other along the axial direction and/or wherein all depth maxima of the second thread ribs (6, 8) are arranged one below the other along the axial direction (A).

9. Heating device (30, 31) according to claim 7 or 8, wherein the first thread ribs (7, 9) of the first group and the second thread ribs (6, 8) of the second group are arranged in an alternating manner one below the other in two overlapping regions (U1, U2) along the axial direction (A).

10. Heating device (30, 31) according to claim 9, wherein the depth of each first thread rib (7, 9) and each second thread rib (6, 8) decreases in the overlapping regions (U1, U2) down to the height of the cylindrical base body (2).

11. Heating device (30, 31) according to claim 9 or 10, wherein only the first thread ribs (7, 9) of the first group are arranged one below the other along the axial direction in a first thread rib region and only the second thread ribs (6, 8) of the second group are arranged one below the other in a second thread rib region, wherein preferably the depth maxima of the first thread ribs (7, 9) are arranged in the first thread rib region and the depth maxima of the second thread ribs (6, 8) are arranged in the second thread rib region.

12. Heating device (30, 31) according to one of the previous claims comprising a threaded ring (10), wherein the threaded ring (10) comprises the threaded body (1) and optionally a flange (11) arranged thereon.

13. Heating device (30, 31) according to any of the previous claims comprising a threaded nipple (20), wherein the threaded nipple (20) comprises the threaded body (1).

14. Heating device unit comprising a plurality of heating devices (30, 31) connected with each other, wherein at least one of the heating devices (30, 31) is a heating device according to one of the previous claims.

15. Heating device unit according to claim 14, wherein the heating devices (30, 31) are connected with each other by means of one or more connecting nipples.

16. Use of a threaded nipple, in particular a threaded nipple formed as a plug, in a heating device according to any one of claims 1 to 13 or in a heating device unit according to any one of claims 14 or 15.

## Revendications

1. Un radiateur (30, 31) comprenant un ou plusieurs corps filetés (1), le corps fileté comprenant :
a. un corps de base cylindrique (2) avec un axe longitudinal de cylindre (A) s'étendant dans la direction axiale ; et
b. une entité de filetage (3) s'étendant le long du corps de base cylindrique (2), l'entité de filetage (3) définissant un spire de filetage à droite (4) et un spire de filetage à gauche (5) se superposant au spire de filetage à droite (4).

2. Radiateur (30, 31) selon la revendication 1, dans lequel l'entité de filetage (3) est une entité de filetage interne avec un spire de filetage interne à droite et un spire de filetage interne à gauche superposé au spire de filetage interne à droite ; ou dans lequel l'entité de filetage (3) est une entité de filetage externe avec un spire de filetage externe à droite et spire de filetage externe à gauche superposé au spire de filetage externe à droite.

3. Radiateur (30, 31) selon la revendication 1 ou 2, dans lequel l'entité de filetage (3) comprend plusieurs cannelures de filetage (6, 7, 8, 9) faisant saillie du corps de base cylindrique (2), chaque cannelure de filetage (6, 7, 8, 9) présentant une profondeur qui diminue, en particulier diminue de manière continue, à partir d'un maximum de profondeur dans les deux directions périphériques opposées.

4. Radiateur (30, 31) selon la revendication 3, dans lequel la profondeur de chaque cannelure de filetage (6, 7, 8, 9) diminue dans les deux directions circonférentielles jusqu'à la hauteur du corps de base cylindrique (2).

5. Radiateur (30, 31) selon la revendication 3 ou 4, dans lequel chaque cannelure de filetage (6, 7, 8, 9) a une section transversale trapézoïdale et/ou triangulaire, dans lequel, pour chaque cannelure de filetage (6, 7, 8, 9), l'angle intérieur entre la cannelure de filetage (6, 7, 8, 9) et le corps de base cylindrique (2) diminue à partir du maximum de profondeur dans les deux directions périphériques opposées, en particulier diminue de manière continue.

6. Radiateur (30, 31) selon l'une quelconque des revendications 3 à 5, dans lequel chaque cannelure de filetage (6, 7, 8, 9) présente une largeur qui diminue, en particulier diminue de manière continue, à partir d'un maximum de largeur dans les deux directions circonférentielles opposées, le maximum de largeur et le maximum de profondeur étant de préférence agencés dans la même position.

7. Radiateur (30, 31) selon l'une quelconque des revendications 3 à 6, dans lequel les multiples cannelures de filetage (6, 7, 8, 9) de l'entité de filetage sont divisées en :
a. un premier groupe de plusieurs premières cannelures de filetage (7, 9) décalées les unes par rapport aux autres dans la direction axiale ;
b. un deuxième groupe de plusieurs deuxièmes cannelures de filetage (6, 8) décalées les unes par rapport aux autres dans la direction axiale ;
les premières cannelures de filetage (7, 9) du premier groupe étant agencées de manière décalée dans la direction circonférentielle par rapport aux secondes cannelures de filetage (6, 8) du second groupe.

8. Radiateur (30, 31) selon la revendication 7, dans lequel tous les maxima de profondeur des premières cannelures de filetage (7, 9) sont agencés les uns sous les autres le long de la direction axiale et/ou dans lequel tous les maxima de profondeur des secondes cannelures de filetage (6, 8) sont agencés les uns sous les autres le long de la direction axiale (A).

9. Radiateur (30, 31) selon la revendication 7 ou 8, dans lequel les premières cannelures de filetage (7, 9) du premier groupe et les deuxièmes cannelures de filetage (6, 8) du deuxième groupe sont agencées en alternance les unes par rapport aux autres dans deux zones de chevauchement (U1, U2) le long de la direction axiale (A).

10. Radiateur (30, 31) selon la revendication 9, dans lequel la profondeur de chaque première cannelure de filetage (7, 9) et de chaque deuxième cannelure de filetage (6, 8) dans les zones de chevauchement (U1, U2) se réduit jusqu'à la hauteur du corps de base cylindrique (2).

11. Radiateur (30, 31) selon la revendication 9 ou 10, dans lequel, le long de la direction axiale, dans une première zone des cannelures de filetage, seules les premières cannelures de filetage (7, 9) du premier groupe sont agencées les unes par rapport aux autres, et dans une deuxième zone des cannelures de filetage, seules les deuxièmes cannelures de filetage (6, 8) du deuxième groupe sont agencées les unes par rapport aux autres, les maxima de profondeur des premières cannelures de filetage (7, 9) étant de préférence agencés dans la première zone des cannelures de filetage et les maxima de profondeur des deuxièmes cannelures de filetage (6, 8) étant agencés dans la deuxième zone des cannelures de filetage.

12. Radiateur (30, 31) selon l'une des revendications précédentes comprenant une bague filetée (10), la bague filetée (10) comprenant le corps fileté (1) et éventuellement une bride (11) disposée sur celui-ci.

13. Radiateur (30, 31) selon l'une des revendications précédentes comprenant un raccord fileté (20), le raccord fileté (20) comprenant le corps fileté (1).

14. Unité de radiateur comprenant plusieurs radiateurs (30, 31) reliés entre eux, au moins un des radiateurs (30, 31) étant un radiateur selon l'une des revendications précédentes.

15. Unité de radiateurs selon la revendication 14, dans laquelle les radiateurs (30, 31) sont reliés entre eux au moyen d'un ou plusieurs raccords de connexion.

16. Utilisation d'un raccord fileté, notamment d'un raccord fileté réalisé sous forme d'obturateur, dans un radiateur selon l'une des revendications 1 à 13 ou dans une unité de radiateur selon l'une des revendications 14 ou 15.
